(19) Europäisches Patentamt
European Patent Office
Office européen des brevets

(11) **EP 4 316 719 A1**

(12) **EUROPEAN PATENT APPLICATION**
published in accordance with Art. 153(4) EPC

(43) Date of publication:
**07.02.2024 Bulletin 2024/06**

(21) Application number: **22810929.4**

(22) Date of filing: **14.03.2022**

(51) International Patent Classification (IPC):
**B23K 11/16** (2006.01)   **B23K 11/11** (2006.01)
**C21D 9/46** (2006.01)   **C22C 38/00** (2006.01)
**C22C 38/06** (2006.01)   **C22C 38/60** (2006.01)
**C23C 2/02** (2006.01)   **C23C 2/06** (2006.01)
**C23C 28/02** (2006.01)

(52) Cooperative Patent Classification (CPC):
**B23K 11/11; B23K 11/16; C21D 9/46; C22C 38/00;
C22C 38/06; C22C 38/60; C23C 2/02; C23C 2/06;
C23C 28/02**

(86) International application number:
**PCT/JP2022/011158**

(87) International publication number:
**WO 2022/249651 (01.12.2022 Gazette 2022/48)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **26.05.2021   JP 2021088100**

(71) Applicant: **JFE Steel Corporation
Tokyo 100-0011 (JP)**

(72) Inventors:
• **TAKASHIMA, Katsutoshi
Tokyo 100-0011 (JP)**
• **YAMAMOTO, Shunsuke
Tokyo 100-0011 (JP)**
• **HOSHINO, Katsuya
Tokyo 100-0011 (JP)**
• **MATSUDA, Hiroshi
Tokyo 100-0011 (JP)**

(74) Representative: **Haseltine Lake Kempner LLP
One Portwall Square
Portwall Lane
Bristol BS1 6BH (GB)**

(54) **RESISTANCE SPOT WELDING MEMBER AND RESISTANCE SPOT WELDING METHOD THEREFOR**

(57)    It is an object to provide a resistance spot welded member and a resistance spot welding method therefor. The present invention is a resistance spot welded member including a resistance spot weld formed by resistance-spot-welding a plurality of steel sheets including at least one high strength coated steel sheet. The high strength coated steel sheet has a specific chemical composition. The at least one high strength coated steel sheet includes a coated layer, a base metal, and an Fe-based electroplated layer serving as a base layer and interposed between the coated layer and the base metal. The amount of solute Si and the amount of solute Mn in a region on a steel sheet surface in the vicinity of the edge of the corona of the resistance spot weld are 35% or less of the amount of solute Si and 35% or less of the amount of solute Mn, respectively, at a position 1/4 of the sheet thickness. In the steel sheet microstructure in the vicinity of the edge of the corona, the average number density of cementite gains having a grain diameter of 0.06 um or more is 0.08 grains/$\mu$m$^2$ or more.

FIG. 1

**Description**

Technical Field

The present invention relates to a resistance spot welded member and a resistance spot welding method therefor. The invention relates particularly to a resistance spot welded member suitable for members of structural components of automobiles etc. and including a resistance spot weld formed by resistance-spot-welding a plurality of steel sheets including at least one high strength coated steel sheet.

Background Art

In recent years, increasing environmental concerns have led to stringent $CO_2$ emission regulations. One challenge in the field of automobiles is to reduce the weight of vehicle bodies for the purpose of improving fuel economy. Therefore, automotive parts are being reduced in thickness by using high strength steel sheets, and steel sheets having a tensile strength (TS) of 980 MPa or more are being increasingly used. From the viewpoint of corrosion resistance, rustproof coated steel sheets such as galvanized steel sheets are used for portions of automotive parts that are exposed to rainwater.

In the assembly of an automobile, press-formed parts produced by press forming are often combined together and resistance-spot-welded (spot-welded) together to produce one automotive part, from the viewpoint of cost and production efficiency. Therefore, to ensure the crash safety of the vehicle body, there is a need for improvement in the strength of the steel sheets (steel sheets for welding) and also in the strength of the weld (resistance spot weld).

Generally, the tensile strength of the joint of a weld increases in proportion to an increase in the tensile strength of the steel sheets for welding (the base metal of the steel sheets for welding). The "tensile strength of the joint" is the tensile shear strength of the joint that is measured under a tensile load applied in a shear direction and is hereinafter referred to as "tensile shear strength." However, as the tensile strength of the steel sheets for welding increases, the nugget, which is the melted zone, is embrittled, and this poses a problem in that the tensile shear strength of the joint decreases.

Moreover, as the tensile strength of steel sheets for welding increases, it is feared that hydrogen entering from the use environment will cause delayed fracture particularly in the resistance spot weld.

Examples of a conventional technique for improving the strength of the weld to prevent the above phenomenon include techniques in Patent Literature 1 and Patent Literature 2. Patent Literature 1 discloses a technique for ensuring the strength of the weld by welding high strength steel sheets having a steel composition with controlled amounts of C etc. and changing the welding conditions. Patent Literature 2 discloses a technique for improving the delayed fracture characteristics of the weld by performing the step of repeatedly increasing and decreasing the welding force applied to the weld after the formation of the nugget while a current is applied to the weld.

Citation List

Patent Literature

PTL 1: Japanese Patent No. 6194765
PTL 2: Japanese Patent No. 6558443

Summary of Invention

Technical Problem

However, in the technique described in Patent Literature 1, the amounts of C, P, S, etc. added are specified such that the equivalent carbon content falls within a prescribed range. Therefore, the material of the high strength steel sheets used as the base metal is limited, and this makes it difficult to ensure high ductility required for steel sheets for automobiles. Moreover, reducing the amount of P and the amount of S causes an increase in steelmaking cost.

The technique described in Patent Literature 2 includes the above-described secondary energization step after the formation of the nugget in a primary energization step in order to reduce the tensile residual stress around the weld. Therefore, the takt time increases, and a significant reduction in production efficiency occurs.

The present invention has been made in view of the foregoing problems, and it is an object to provide a resistance spot welded member including a resistance spot weld formed by resistance-spot-welding a plurality of steel sheets including at least one high strength coated steel sheet. It is another object of the invention to provide a resistance spot welding method for the resistance spot welded member.

Solution to Problem

In view of the foregoing circumstances, the inventors have conducted extensive studies. As a result of the studies, the inventors have found a way to improve the tensile shear strength and delayed fracture resistance of a resistance spot weld in a resistance spot welded member (e.g., an automotive member) including a coated steel sheet (i.e., high strength coated steel sheet) having a tensile strength of 980 MPa or more as a steel sheet for welding.

Specifically, in the resistance spot weld subjected to resistance spot welding, the amount of solute Si (% by mass) and the amount of solute Mn (% by mass) in regions of steel sheet surface layers that are in the vicinity of the edge of the corona are specified, and fine carbide is generated in the steel sheet microstructure in the vicinity of the edge of the corona. The inventors have found that, in this case, the resistance spot weld subjected to resistance spot welding has both good tensile shear strength and good delayed fracture resistance.

Specifically, in resistance spot welding, when the equivalent carbon content in the steel composition (chemical composition) of the base metal in the high strength coated steel sheet is high in order to ensure the tensile strength of the base metal, the toughness of the nugget formed is reduced. Therefore, the crack growth rate in interfacial fracture increases, and the tensile shear strength decreases significantly.

Moreover, press-formed parts are combined and resistance-spot-welded together to produce a welded member. Then, since a sheet gap etc. are present in the resistance spot weld, when the welded member is used with stress applied to the resistance spot weld, tensile stress is applied to a region extending from the edge of the nugget to the corona. In this case, hydrogen entering the steel material from the use environment causes delayed fracture in the resistance spot weld.

Accordingly, in the present invention, the amount of solute Si and the amount of solute Mn in the steel sheet surface layer in the base metal of the high strength coated steel sheet are reduced, so that the amount of hard phases such as martensite that trap diffusive hydrogen is reduced. In this case, the diffusivity of hydrogen entering the steel material increases, and a hydrogen path for allowing hydrogen generated by corrosion of the steel sheet surfaces to escape immediately from the steel sheets is formed. The inventors have further found that, by relaxing the tensile stress in the vicinity of the edge of the corona, the effect of improving delayed fracture resistance is obtained.

As for the welding conditions of resistance spot welding, when the holding time of the welding force after completion of energization is long, the cooling rate after the energization is high in the vicinity of the corona. Therefore, the inventors have found that, since the amount of precipitation of cementite is insufficient, the delayed fracture resistance and the tensile shear strength are significantly reduced. Moreover, when the holding time of the welding force after completion of the energization is short, a sufficient amount of cementite is precipitated in the edge portion of the corona due to self-tempering, so that toughness is improved. The inventors have also found that this can improve the delayed fracture resistance and the tensile shear strength.

The present invention is based on the above findings and summarized as follows.

[1] A resistance spot welded member including a resistance spot weld formed by resistance-spot-welding a plurality of steel sheets including at least one high strength coated steel sheet,

wherein the high strength coated steel sheet has a chemical composition containing, in mass %,
C: 0.10 to 0.40%,
Si: 0.7 to 2.5%,
Mn: 2.0 to 4.0%,
P: 0.05% or less,
S: 0.004% or less,
Al: 0.01 to 1.00%, and
N: less than 0.010%,
with the balance being Fe and incidental impurities,
wherein the high strength coated steel sheet includes a coated layer, a base metal, and an Fe-based electroplated layer serving as a base layer and interposed between the coated layer and the base metal,
wherein, when a position on a steel sheet surface that is spaced 100 um from an edge of a corona of the resistance spot weld in a direction toward a base metal zone along a steel sheet faying surface is denoted as a starting point S,
the amount of solute Si and the amount of solute Mn in a region within 7 um from the starting point S in a thickness direction are 35% or less of the amount of solute Si and 35% or less of the amount of solute Mn, respectively, at a position 1/4 of a sheet thickness from the starting point S in the thickness direction, and

wherein, when a position on the steel sheet surface that is spaced 50 um from the edge of the corona in the direction toward the base metal zone along the steel sheet faying surface is denoted as a starting point T, the average number density of cementite grains having a grain diameter of 0.06 um or more in a steel sheet microstructure in a region extending from 50 um to 100 um inclusive from the starting point T in the thickness direction is 0.08 grains/$\mu$m$^2$ or more.

[2] The resistance spot welded member according to [1], wherein the chemical composition further contains, in mass %, one or two or more selected from

Nb: 0.05% or less,
Ti: 0.05% or less,
V: 0.05% or less,
Cr: 1.0% or less,
Mo: 0.50% or less,
Cu: 0.50% or less,
Ni: 0.50% or less,
Sb: 0.020% or less,
B: 0.010% or less,
Ca: 0.0050% or less, and
REMs: 0.0050% or less.

[3] The resistance spot welded member according to [1] or [2], wherein the coated layer of the high strength coated steel sheet is a galvanized layer or a hot-dip galvannealed layer.

[4] The resistance spot welded member according to any one of [1] to [3], wherein the coating weight of the Fe-based electroplated layer is 0.5 g/m$^2$ or more per side.

[5] The resistance spot welded member according to any one of [1] to [4], wherein the high strength coated steel sheet has a tensile strength of 980 MPa or more.

[6] The resistance spot welded member according to any one of [1] to [5], wherein the high strength coated steel sheet has a microstructure including retained austenite at a volume fraction of 30% or less.

[7] A resistance spot welding method for the resistance spot welded member according to any one of [1] to [6], the Fe-based electroplated layer that serves as the base layer being interposed between the coated layer and the base metal of the at least one high strength coated steel sheet,
the method including:

a primary energization step of holding, between a pair of welding electrodes, a sheet set including the plurality of steel sheets including the at least one high strength coated steel sheet and performing energization under application of welding force to thereby form a nugget,
wherein a holding time Th (s) of the welding force after completion of the energization in the primary energization step satisfies a relation of formula (1):

$$0 < Th \leq \{F \times (Iw / 1.5)\} / 45 \qquad (1)$$

where, in formula (1), Th is the holding time (s) of the welding force in the primary energization step; F is the welding force (kN) in the primary energization step; and Iw is a value of a current (kA) in the primary energization step.

[8] The resistance spot welding method for the resistance spot welded member according to [7], wherein the primary energization step is

the step of performing the energization at the current value Iw (kA) while the sheet set is held between the welding electrodes with the welding force F (kN) or
the step of performing the energization using a transition process in which the current is increased continuously to the current value Iw (kA) while the sheet set is held between the welding electrodes with the welding force F (kN).

[9] The resistance spot welding method for the resistance spot welded member according to [7] or [8], the method further including, after the primary energization step, a secondary energization step,

wherein the secondary energization step is the step of performing energization at a current value equal to or higher than 1.1 times the current value Iw in the primary energization step for an energization time of 1.0 s or shorter or

the step of performing energization at a current value equal to or lower than 0.9 times the current value Iw in the primary energization step for an energization time of 2.0 s or shorter.

The "good tensile shear strength" in the invention means that the tensile shear strength based on a shear tensile test performed using a method described later in Examples is 12.0 kN or more.

The "good delayed fracture resistance" in the invention means as follows. As described later in Examples, the obtained welded joint is left to stand in air at room temperature (20°C) for 24 hours, then immersed in an aqueous solution of 3% NaCl + 1.0% $NH_4SCN$, and subjected to cathodic electrolytic charging at a current density of 0.07 mA/cm$^2$ for 96 hours, and then the presence or absence of delayed fracture is checked. When no delayed fracture is found in the welded joint after immersion, the delayed fracture resistance is rated good.

Advantageous Effects of Invention

In the present invention, the resistance spot welded member having the resistance spot weld formed by resistance-spot-welding the plurality of steel sheets including at least one high strength coated steel sheet has good tensile shear strength and good delayed fracture resistance.

Brief Description of Drawings

[Fig. 1] Fig. 1 is a cross-sectional view schematically showing a resistance spot welded member in an embodiment of the invention.
[Fig. 2] Fig. 2 is a cross-sectional view schematically showing a resistance spot welded member in another embodiment of the invention.

Description of Embodiments

The present invention will next be described. However, the invention is not limited to the following embodiments.

[Resistance spot welded member]

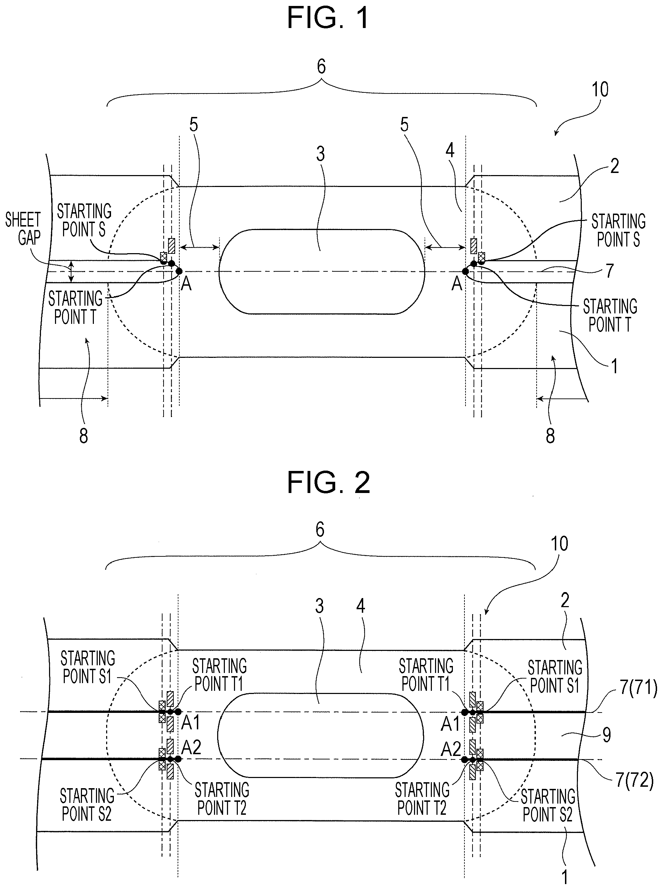

Referring first to Fig. 1, the resistance spot welded member of the invention will be described. Fig. 1 shows an exemplary cross-sectional view of a resistance spot weld 6 of the resistance spot welded member 10 of the invention and the periphery thereof, the cross-sectional view being taken in the thickness direction of the resistance spot welded member 10.

The invention is a resistance spot welded member having a resistance spot weld formed by resistance-spot-welding a plurality of stacked steel sheets. The stacked steel sheets include at least one high strength coated steel sheet described later. No particular limitation is imposed on the number of stacked steel sheets, so long as two or more steel sheets are stacked. No particular limitation is imposed on the upper limit of the number of steel sheets, and the number of steel sheets is preferably 4 or less.

The example shown in Fig. 1 is the resistance spot welded member 10 formed by welding two stacked steel sheets, and the high strength coated steel sheet is applied to a steel sheet 1 disposed on the lower side and/or a steel sheet 2 disposed on the upper side. In Fig. 1, the illustration of the coated layer in the high strength coated steel sheet is omitted. The resistance spot weld 6 having a microstructure described below is formed on the steel sheet faying surface (faying surface) 7 of the steel sheets 1 and 2.

[Microstructure of resistance spot weld]

The microstructure of the resistance spot weld in the resistance spot welded member of the invention will be described in detail.

As shown in Fig. 1, the resistance spot weld 6 (hereinafter referred to as the "weld") in the resistance spot welded member 10 includes a nugget 3 and a heat-affected zone (HAZ) 4. A solid-phase-welded ring-shaped corona 5 is present outside the nugget 3 but within the region of the HAZ 4. As shown in the thicknesswise cross-sectional view in Fig. 1, the edge (i.e., points A) of the corona 5 is present between the steel sheets 1 and 2, i.e., on the faying surface 7.

The inventors have produced resistance spot welded members each having a weld formed by resistance-spot-welding a plurality of steel sheets including at least one high strength coated steel sheet described later. The inventors have carefully examined a region in the vicinity of the corona of the weld in each resistance spot welded member. Then the inventors have found that the resistance spot welded member can have both good tensile shear strength and good delayed fracture resistance by: (i) controlling, within suitable ranges, the amount of solute Si and the amount of solute Mn in a region in a steel sheet surface layer of a base metal in the vicinity of the edge of the corona (which is, in the example shown in Fig. 1, a steel sheet surface layer on the faying surface 7 side of a steel sheet in the vicinity of the edge (points A) of the corona); and (ii) forming fine carbide in the microstructure of the base metal of the steel sheet in a region in the vicinity of the edge of the corona (in the microstructure in the heat-affected zone). The microstructure of the invention is formed at both edges of the nugget 3. In the present invention, when at least one of the plurality of steel sheets is the high strength coated steel sheet described later, the microstructure of the invention is formed on the high strength coated steel sheet side, and the effects of the invention can thereby be obtained. For example, when the sheet set used includes the high strength coated steel sheet of the invention and a cold rolled steel sheet, the microstructure of the invention is not formed on the cold rolled steel sheet side but is formed on the high strength coated steel sheet side (see Fig. 1).

In the present invention, the amount of solute Si and the amount of solute Mn in the steel sheet surface layer in the vicinity of the edge of the corona are specified as described above for (i).

Specifically, as shown in Fig. 1, a position on a steel sheet surface that is spaced 100 um from the edge of the corona 5 (i.e., point A in Fig. 1) in a direction toward a base metal zone 8 of the steel sheets 1 and 2 (i.e., a direction away from the nugget 3) along the faying surface 7 is denoted as a starting point S. In the example in Fig. 1, the steel sheet including the coated layer is disposed such that the coated layer is located on the faying surface 7 side. A region within 7 um from the starting point S in the thickness direction is "the steel sheet surface layer in the vicinity of the edge of the corona" described above. Moreover, a position 1/4 of the thickness from the starting point S in the thickness direction is "the position 1/4 of the thickness in the vicinity of the edge of the corona." In the present invention, the amount of solute Si (% by mass) and the amount of solute Mn (% by mass) in the steel sheet surface layer in the vicinity of the edge of the corona are 35% or less of the amount of solute Si (% by mass) and 35% or less of the amount of solute Mn (% by mass), respectively, at the position 1/4 of the thickness in the vicinity of the edge of the corona.

To ensure good tensile shear strength and good delayed fracture resistance, it is necessary that the ratios of the amount of solute Si and the amount of solute Mn in the steel sheet surface layer to those at the position 1/4 of the thickness be each 35% or less. If the above ratios exceed 35%, hard phases such as martensite are formed. Moreover, when cementite and lattice defects are present in the steel sheet surface layer, diffusive hydrogen is trapped, and the hydrogen diffuses to the edge of the nugget and stress concentrated portions of the corona with time. This causes a reduction in delayed fracture resistance. Moreover, stress concentration increases, and this causes not only a reduction in the delayed fracture resistance but also a reduction in the tensile shear strength. If the concentration of solute Si in the steel sheet surface layer is high, resistance to liquid metal embrittlement that occurs when the coated layer melts decreases. The above ratios are preferably 30% or less, more preferably 25% or less, and still more preferably 24% or less. The above ratios may be 0%. The above ratios are preferably 2% or more.

In the present invention, in addition to the above features, the average number density of fine carbide present in the steel sheet microstructure in the vicinity of the edge of the corona is also specified as described above in (ii) .

Specifically, as shown in Fig. 1, a position on a steel sheet surface that is spaced 50 um from the edge of the corona 5 (i.e., point A in Fig. 1) in the direction toward the base metal zone 8 of the steel sheets 1 and 2 (i.e., the direction away from the nugget 3) along the faying surface 7 is denoted as a starting point T. A region extending from 50 um to 100 um inclusive from the starting point T in the thickness direction is "the region in the vicinity of the edge of the corona" described above in (ii). The average number density of cementite grains having a grain diameter of 0.06 um or more in the steel sheet microstructure (i.e., the microstructure in the heat-affected zone) in the vicinity of the edge of the corona is set to be 0.08 grains/$\mu$m$^2$ or more.

For the same reason as that in (i), it is necessary that the average number density of cementite grains having a grain diameter of 0.06 um or more be 0.08 grains/$\mu$m$^2$ or more. If the average number density of cementite grains having the above-describe grain diameter is less than 0.08 grains/$\mu$m$^2$, the hardness of martensite is excessively high, and the sensitivity to delayed fracture characteristics becomes high. Moreover, the toughness decreases excessively, and therefore the tensile shear strength also decreases. The average number density is preferably 0.10 grains/$\mu$m$^2$ or more and more preferably 0.11 grains/$\mu$m$^2$ or more. The upper limit of the average number density is not particularly specified. The average number density is preferably 0.30 grains/$\mu$m$^2$ or less and more preferably 0.25 grains/$\mu$m$^2$ or less.

The steel sheet microstructure (i.e., the microstructure of the heat-affected zone) in the vicinity of the edge of the corona is preferably martensite and/or tempered martensite. The reason for this is to obtain sufficient joint strength. The total volume fraction of martensite and/or tempered martensite with respect to the total volume of the region in the vicinity of the edge of the corona is preferably 20% or more and more preferably 25% or more. The total volume fraction of martensite and/or tempered martensite may be 100%.

In the present invention, the amount of solute Si, the amount of solute Mn, the grain diameter of the cementite grains, the average number density of the cementite grains, and the steel sheet microstructure in the vicinity of the edge of the corona can be measured using methods described later in Examples.

For example, when three or more steel sheets are stacked, the weld 6 is formed so as to include all the steel sheets. Fig. 2 shows an example of three stacked steel sheets. In this sheet set, all the three steel sheets are high strength coated steel sheets in the invention. As shown in Fig. 2, in the present invention, when the sheet set includes three or more stacked steel sheets, a steel sheet disposed between the lowermost steel sheet and the uppermost steel sheet is referred to as an "intermediate steel sheet 9." In this case, two or more steel sheet faying surfaces (faying surfaces) 7 are present. Even in this case, as in the weld 6 shown in Fig. 1, a solid phase-welded ring-shaped corona 5 is present in a region outside the nugget 3 but within the HAZ 4. Edges (i.e., points A) of the corona 5 are present on the faying surfaces 7. Even when three or more steel sheets are stacked, the above-described microstructure is formed in the vicinity of each of the edges of the corona, as described above in (i) and (ii). In the example shown in Fig. 2, two faying surfaces 71 and 72 are present, and the edges (i.e., points A1 and points A2) of the corona are present on these faying surfaces. In this example, the high strength coated steel sheet of the invention is used for all the steel sheets. Therefore, the above-described microstructure is formed on the upper and lower sides of each of the faying surfaces 71 and 72.

[High strength coated steel sheet]

A description will be given of the reasons for the limitations on the chemical composition of the base metal zone in the high strength coated steel sheet in the resistance spot welded member of the invention. In the following description, "%" in the chemical composition represents "% by mass" unless otherwise specified. The following chemical composition is preferable for obtaining a steel sheet having a tensile strength of 980 MPa or more.

C: 0.10 to 0.40%

C is an element effective in increasing the tensile shear strength. C also contributes to the formation of martensite and cementite in the invention. If the content of C is less than 0.10%, the hardness of martensite after resistance spot welding is low, so that the tensile shear strength decreases. Therefore, the content of C is 0.10% or more. The content of C is preferably 0.12% or more. If the content of C exceeds 0.40%, self-tempering of martensite after resistance spot welding is insufficient, and the delayed fracture resistance and the tensile shear strength decrease. Therefore, the content of C is 0.40% or less. The content of C is preferably 0.38% or less and more preferably 0.35% or less.

Si: 0.7 to 2.5%

Si reduces the segregation of Mn and therefore has the effect of mitigating the hardness distribution in the steel sheet in the thickness direction, and therefore the resistance weldability is improved. To obtain this effect, the content of Si needs to be 0.7% or more. The content of Si is preferably 0.9% or more and more preferably 1.0% or more. However, if an excessively large amount of Si is added, the temper softening resistance increases, and the delayed fracture resistance decreases. Therefore, the content of Si is 2.5% or less. The content of Si is preferably 2.2% or less and more preferably 1.8% or less.

Mn: 2.0 to 4.0%

Mn is an element that contributes to an increase in the tensile shear strength through solid solution strengthening and the formation of martensite. To obtain this effect, the content of Mn needs to be 2.0% or more. The content of Mn is preferably 2.2% or more. If an excessively large amount of Mn is contained, the desired volume fraction is not obtained in the steel sheet microstructure in the region in the vicinity of the nugget (i.e., in the vicinity of the edge of the corona). Moreover, when hydrogen enters the steel sheet, slip constraint at grain boundaries increases, and cracks easily propagate along the grain boundaries, so that the delayed fracture resistance after resistance spot welding decreases. Therefore, the content of Mn is 4.0% or less. The content of Mn is preferably 3.7% or less, more preferably 3.5% or less, and still more preferably 2.9% or less.

P: 0.05% or less

If an excessively large amount of P is added, significant segregation of P at grain boundaries occurs. This causes embrittlement of the grain boundaries and a reduction in resistance weldability. Therefore, the content of P is 0.05% or less. Preferably, the content of P is 0.04% or less. The lower limit of the content of P is not particularly specified.

However, reducing the amount of P to a very low level increases the cost of steel making. Therefore, the content of P is preferably 0.005% or more.

S: 0.004% or less

When the content of S is large, a large amount of sulfides such as MnS are formed, and cracks may form from MnS when hydrogen enters the steel, causing a reduction in the delayed fracture resistance after resistance welding. Therefore, the upper limit of the content of S is 0.004%. The content of S is preferably 0.003% or less. The lower limit of the content of S is not particularly specified. However, reducing the amount of S to a very low level increases the cost of steel making. Therefore, the content of S is preferably 0.0002% or more.

Al: 0.01 to 1.00%

Al is an element necessary for deoxidization. To obtain this effect, the content of Al needs to be 0.01% or more. However, if an excessively large amount of Al is added, the temper softening resistance increases, and the delayed fracture resistance decreases. Therefore, the upper limit of Al is 1.00%. The content of Al is preferably 0.80% or less and more preferably 0.60% or less.

N: less than 0.010%

N forms coarse nitrides and causes a reduction in shear tensile after resistance spot welding, and therefore the content of N need to be reduced. This tendency is more pronounced when the content of N is 0.010% or more. Therefore, the content of N is less than 0.010%. The content of N is preferably 0.0075% or less. Reducing the amount of N to a very low level increases the cost of steelmaking, and therefore the lower limit of the content of N is not particularly specified. The content of N is preferably 0.0002% or more and more preferably 0.0005% or more.

The high strength coated steel sheet used in the present invention contains the elements described above, with the balance being Fe and incidental impurities. Examples of the incidental impurities include Co, Sn, and Zn. The allowable ranges of the contents of these elements are Co: 0.05% or less, Sn: 0.01% or less, and Zn: 0.01% or less. In the present invention, when Ta, Mg, and Zr are contained within the ranges for the chemical composition of ordinary steel, the effects of the invention are not lost.

In the present invention, the above chemical composition is the basic chemical composition of the high strength coated steel sheet. In the present invention, the high strength coated steel sheet may optionally contain, in addition to the above chemical composition, one or two or more selected from Nb, Ti, V, Cr, Mo, Cu, Ni, Sb, B, Ca, and REMs. Each of the components Nb, Ti, V, Cr, Mo, Cu, Ni, Sb, B, Ca, and REMs may be optionally contained, and the contents of these components may be 0%.

Nb: 0.05% or less

Nb improves the tensile shear strength and delayed fracture resistance after resistance welding through the formation of fine carbonitrides. To obtain this effect, the content of Nb is preferably 0.005% or more. The content of Nb is more preferably 0.007% or more. If a large amount of Nb is added, not only does the elongation decrease significantly, but also cracking occurs in the slab after continuous casting. Therefore, when Nb is contained, the content of Nb is 0.05% or less. The content of Nb is preferably 0.045% or less, more preferably 0.040% or less, and still more preferably 0.035% or less.

Ti: 0.05% or less

Ti improves the tensile shear strength and delayed fracture resistance after resistance spot welding through the formation of fine carbonitrides. When Ti is contained to obtain this effect, the content of Ti is preferably 0.005% or more. The content of Ti is more preferably 0.007% or more. If a large amount of Ti is added, the elongation decreases significantly. Therefore, when Ti is contained, the content of Ti is 0.05% or less. The content of Ti is preferably 0.040% or less and more preferably 0.035% or less.

V: 0.05% or less

V can contribute to an improvement in the tensile shear strength and delayed fracture resistance through the formation of fine carbonitrides. Since V has the above effect, when V is contained, the content of V is preferably 0.005% or more. The content of V is more preferably 0.010% or more. Even if a large amount of V is added, the strength increasing effect obtained by the excess amount of V over 0.05% is small. Moreover, this leads to an increase in the cost of alloying. Therefore, when V is contained, the content of V is 0.05% or less and more preferably 0.035% or less.

Cr: 1.0% or less

Cr is an element that facilitates the formation of martensite in the resistance spot weld and contributes to an increase in the tensile shear strength. When Cr is contained to achieve this effect, the content of Cr is preferably 0.05% or more. The content of Cr is more preferably 0.08% or more. If the content of Cr exceeds 1.0%, surface defects are easily formed. Therefore, when Cr is contained, the content of Cr is 1.0% or less. The content of Cr is preferably 0.8% or less.

Mo: 0.50% or less

Like Cr, Mo is an element that facilitates the formation of martensite in the resistance spot weld and contributes to an increase in the tensile shear strength. Moreover, Mo is an element that increases the hydrogen overvoltage to thereby improve the delayed fracture resistance. When Mo is contained to achieve these effects, the content of Mo is preferably 0.03% or more. The content of Mo is preferably 0.04% or more and more preferably 0.06% or more. However, if the content of Mo exceeds 0.50%, the above effects are saturated, and this only leads to an increase in cost. Therefore, when Mo is contained, the content of Mo is 0.50% or less. The content of Mo is preferably 0.42% or less and more preferably 0.35% or less.

Cu: 0.50% or less

When Cu is added, the hydrogen overvoltage increases, and therefore the delayed fracture resistance is improved. When Cu is contained to achieve this effect, the content of Cu is preferably 0.005% or more. The content of Cu is more preferably 0.010% or more. Even if the content of Cu exceeds 0.50%, the above effect is saturated, and surface defects caused by Cu are easily formed. Therefore, when Cu is contained, the content of Cu is 0.50% or less. The content of Cu is preferably 0.40% or less and more preferably 0.35% or less.

Ni: 0.50% or less

Like Cu, Ni is an element that increases the hydrogen overvoltage and therefore improves the delayed fracture resistance. When Ni is contained to achieve this effect, the content of Ni is preferably 0.005% or more. When Ni and Cu are added simultaneously, Ni exhibits the effect of suppressing the formation of surface defects caused by Cu and is therefore effective when Cu is added. The content of Ni is more preferably 0.010% or more. Even if the content of Ni exceeds 0.50%, the above effects are saturated. Therefore, when Ni is contained, the content of Ni is 0.50% or less. The content of Ni is preferably 0.40% or less and more preferably 0.35% or less.

B: 0.010% or less

B improves the hardenability, facilitates the formation of martensite in the resistance spot weld, and contributes to an increase in the tensile shear strength. When B is contained to achieve this effect, the content of B is preferably 0.0002% or more. The content of B is more preferably 0.0004% or more. Even if the content of B exceeds 0.010%, the above effect is saturated. Therefore, when B is contained, the content of B is 0.010% or less. The content of B is preferably 0.008% or less and more preferably 0.005% or less.

Sb: 0.020% or less

Sb has the effect of reducing the formation of a decarburized layer formed in the steel sheet surface layer and therefore allows the potential distribution on the steel sheet surface in an aqueous solution environment to be uniform, so that the delayed fracture resistance is improved. When Sb is contained to achieve the above effect, the content of Sb is preferably 0.001% or more. The content of Sb is more preferably 0.005% or more. However, if the content of Sb exceeds 0.020%, a rolling load applied during the production of the steel sheet increases, and the productivity decreases. Therefore, when Sb is contained, the content of Sb is 0.020% or less.

Ca: 0.0050% or less, REMs: 0.0050% or less

Ca and REMs (rare earth metals) are elements that spheroidize sulfides and thereby contribute to an improvement in the delayed fracture resistance and may be added as needed. When Ca and REMs are contained to achieve the above effect, the contents of Ca and REMs are each preferably 0.0005% or more. The contents of Ca and REMs are each more preferably 0.0007% or more. Even if the contents of Ca and REM exceed 0.0050%, their effects are saturated. Therefore, when Ca and REMs are contained, the contents of Ca and REMs are each 0.0050% or less. The contents of Ca and REMs are each more preferably 0.0040% or less.

[Steel sheet microstructure of high strength coated steel sheet]

In the present invention, no particular limitation is imposed on the steel sheet microstructure of the above-described high strength coated steel sheet (the steel sheet microstructure of the base metal). However, in terms of the application of the resistance spot welded member of the invention to structural components of automobiles etc., it is preferable that the base metal of the steel sheet has a steel sheet microstructure containing retained austenite at a volume fraction of 30% or less. This is because one issue that arises when the steel sheet used as the base metal is a steel sheet having a tensile strength of 980 MPa or more is press-formability. The volume fraction of the retained austenite may be 0% so long as the press-formability described above is obtained. The volume fraction of the retained austenite is preferably 3% or more and more preferably 4% or more. The volume fraction of the retained austenite is more preferably 25% or less. Preferably, the steel sheet microstructure of the base metal contains the retained austenite capable of ensuring a large uniform elongation induced by stress transformation at the above-described volume fraction.

[Type of coating on high strength coated steel sheet]

In the high strength coated steel sheet described above, the type of coating on the surface of the base metal is preferably a galvanized coating. In particular, from the viewpoint of automotive applications, hot-dip galvanizing treatment described later may be performed to form a hot-dip galvanized steel sheet (GI) having a galvanized layer on the surface of the base metal. After the hot-dip galvanizing treatment, galvannealing treatment described later may be performed to form a hot-dip galvannealed steel sheet (GA) having a galvannealed layer on the surface of the base metal.

The coating weight of the galvanized layer per side is preferably 25 $g/m^2$ or more and preferably 80 $g/m^2$ or less. When the coating weight of the galvanized layer per side is 25 $g/m^2$ or more, the corrosion resistance can be further improved. Moreover, the coating weight can be easily controlled. When the coating weight of the galvanized layer per side is 80 $g/m^2$ or less, the adhesion of the coating is good. The coating weight is more preferably 30 $g/m^2$ or more and is more preferably 75 $g/m^2$ or less.

The components of the hot-dip galvanizing bath are not particularly specified. However, in particular, from the viewpoint of automotive applications, the hot-dip galvanizing bath contains preferably Al, Zn, and incidental impurities. The concentration of Al in the bath is from 0.05% by mass to 0.25% by mass inclusive. When the concentration of Al in the bath is 0.05% by mass or more, the occurrence of bottom dross is prevented, and the formation of defects by adhesion of dross to the steel sheet can be prevented. When the concentration of Al in the bath is 0.25% by mass or less, an increase in top dross is prevented, and the formation of defects by adhesion of dross to the steel sheet can be prevented. This also leads to a reduction in cost. No limitation is imposed on the other conditions for the hot-dip galvanizing treatment. For example, preferably, the temperature of the hot-dip galvanizing bath is generally within the range of 440 to 500°C, and the galvanization is performed by immersing a steel sheet having a temperature of 440 to 550°C in the hot-dip galvanizing bath.

After the hot-dip galvanizing treatment, the galvanized coating may be subjected to galvannealing treatment in the temperature range of 450 to 600°C. By performing the galvannealing treatment in the temperature range of 450 to 600°C, the concentration of Fe in the coating is 7 to 15%, and the adhesion of the coating and the corrosion resistance after painting are improved. If the temperature is lower than 450°C, the galvannealing does not proceed sufficiently. In this case, a reduction in the sacrificial corrosion protection effect and a reduction in slidability occur. If the temperature is higher than 600°C, the galvannealing proceeds significantly, and a reduction in powdering characteristics occurs.

In the present invention, it is also important that the above-described high strength coated steel sheet have a precoated layer at the interface between the coated layer and the base metal. The precoated layer is formed by precoating treatment performed before the hot-dip galvanizing treatment and including forming a coated layer (base layer) serving as a base on the base metal. This precoated layer is an Fe-based electroplated layer. The Fe-based electroplated layer may be, for example, a pure Fe coated layer, and coated layers formed of alloys such as Fe-B alloys, Fe-C alloys, Fe-P alloys, Fe-N alloys, Fe-O alloys, Fe-Ni alloys, Fe-Mn alloys, Fe-Mo alloys, and Fe-W alloys may also be used. No particular limitation is imposed on the chemical composition of the Fe-based electroplated layer. In particular, from the viewpoint of automotive applications, it is preferable that the chemical composition contains one or two or more elements selected from the group consisting of B, C, P, N, O, Ni, Mn, Mo, Zn, W, Pb, Sn, Cr, V, and Co in a total amount of 10% or less with the balance being Fe and incidental impurities. When the total amount of the elements other than Fe is 10% or less, a reduction in the efficiency of electrolysis is prevented, and the Fe-based electroplated layer can be formed at low cost.

When the Fe-based electroplated layer is provided as the precoated layer, the amount of solute Si and the amount of solute Mn in the steel sheet surface layer of the base metal after resistance spot welding are reduced, and the properties of martensite are changed, so that the tensile stress in the vicinity of the edge of the corona can be relaxed. Moreover, the Fe-based coated layer functions as a soft layer, and the stress applied to the surface of the high strength coated steel sheet after resistance spot welding can be relaxed. As described above, the residual stress in the resistance spot weld is reduced, and diffusive hydrogen is effectively discharged from the steel sheet surface, so that the delayed fracture resistance is improved.

The coating weight of the Fe-based electroplated layer per side is preferably 0.5 g/m$^2$ or more. When the coating weight is 0.5 g/m$^2$ or more, the operational effects described above can be more advantageously obtained. The coating weight of the Fe-based electroplated layer per side is preferably 1.0 g/m$^2$ or more and more preferably 1.5 g/m$^2$ or more. No particular limitation is imposed on the upper limit of the coating weight of the Fe-based electroplated layer per side. However, from the viewpoint of cost, the coating weight of the Fe-based electroplated layer per side is preferably 60 g/m$^2$ or less. The coating weight is more preferably 50 g/m$^2$ or less, still more preferably 40 g/m$^2$ or less, and yet more preferably 30 g/m$^2$ or less.

In the present invention, the thickness of the Fe-based electroplated layer is measured as follows.

A sample with a size of 10 mm × 15 mm is cut from a high-strength hot-dip galvanized steel sheet subjected to hot-dip galvanizing treatment and then to galvannealing treatment and is embedded in a resin to prepare a cross-section-embedded sample. The cross section of the sample is observed at randomly selected three points using a scanning electron microscope (SEM) at an acceleration voltage of 15 kV at a magnification of 2000X to 10000X according to the thickness of the Fe-based electroplated layer. The average value of the thicknesses in the three viewing fields is determined and multiplied by the specific gravity of iron to convert the thickness to the coating weight of the Fe-based electroplated layer per side.

Next, a description will be given of preferred production conditions when the precoated layer is an Fe-based electroplated layer.

First, the surface of a high strength unannealed cold rolled steel sheet is subjected to Fe-based electroplating treatment to obtain an unannealed Fe-based electroplated steel sheet. No particular limitation is imposed on the Fe-based electroplating treatment method. For example, the Fe-based electroplating bath used may be a sulfuric acid bath, a hydrochloric acid bath, or a mixture thereof. The high strength unannealed cold rolled steel sheet having subjected to cold rolling may be subjected to the Fe-based electroplating treatment without oxidation treatment in, for example, a preheating furnace. The content of Fe ions in the Fe-based electroplating bath before the start of energization is preferably 1.0 mol/L or more in terms of Fe$^{2+}$. When the content of Fe ions in the Fe-based electroplating bath is 1.0 mol/L or more in terms of Fe$^{2+}$, the coating weight of Fe is sufficient.

The Fe-based electroplating bath contains Fe ions and alloying elements such as B, C, P, N, O, Ni, Mn, Mo, Zn, W, Pb, Sn, Cr, V, and Co and may further contain a conductive assistant such as sodium sulfate or potassium sulfate as an additive or an impurity. The metal elements may be contained as metal ions, and the non-metal elements may each be contained as part of boric acid, phosphoric acid, nitric acid, organic acids, etc. The iron sulfate plating bath may contain a conductive assistant such as sodium sulfate or potassium sulfate, a chelating agent, and a pH buffer.

No particular limitation is imposed on the other conditions for the Fe-based electroplating bath. For example, the temperature of the bath is preferably 30°C or higher, in consideration of ease of maintaining the temperature constant. The pH of the Fe-based electroplating bath is not particularly specified. However, in consideration of the electric conductivity of the Fe-based electroplating bath, the pH is preferably 3.0 or less. No particular limitation is imposed on the current density. The current density is preferably 10 to 150 A/dm$^2$. The traveling speed of the sheet may be from 5 mpm to 150 mpm inclusive. If the traveling speed of the sheet is less than 5 mpm, the productivity is poor. If the traveling speed of the sheet is 150 mpm or more, it is difficult to stably control the coating weight.

Before the Fe-based electroplating treatment, degreasing treatment for cleaning the surface of the high strength unannealed cold rolled steel sheet and washing with water may be performed, and pickling treatment for activating the surface of the high strength unannealed cold rolled steel sheet and washing with water may also be performed. After these pretreatments, the Fe-based electroplating treatment is performed. In the pickling treatment, any of various acids such as sulfuric acid, hydrochloric acid, nitric acid, and a mixture thereof can be used. In particular, sulfuric acid, hydrochloric acid, or a mixture thereof is preferred. The concentration of the acid is not particularly specified. However, in consideration of the capability to remove an oxide film, prevention of surface deterioration (surface defects) due to over-pickling, etc., the concentration of the acid is preferably about 1 to about 20 mass%. The pickling treatment solution may contain an antifoaming agent, a pickling accelerator, a pickling inhibitor, etc.

Next, after the Fe-based electroplating treatment described above, the unannealed Fe-based electroplated steel sheet is subjected to an annealing step of holding the steel sheet in a reducing atmosphere having a dew-point temperature of -30°C or lower and a hydrogen concentration of from 1.0% by volume to 30.0% by volume inclusive in a temperature range of from 650°C to 900°C inclusive for 30 seconds or longer and 600 seconds or shorter and then cooling the steel sheet, and an Fe-based electroplated steel sheet is thereby obtained. Preferably, the annealing step is performed in order to increase the strength of the steel sheet by removing the strain generated in the unannealed Fe-based electroplated steel sheet in the rolling step and recrystallizing the microstructure.

[Resistance spot welding method]

Next, a resistance spot welding method for the resistance spot welded member of the invention having the weld described above will be described.

The resistance spot welded member of the invention can be produced by resistance spot welding. Specifically, a sheet set prepared by stacking a plurality of steel sheets including at least one high strength coated steel sheet described above is held between a pair of welding electrodes, and the welding electrodes are energized under application of welding force to join the steel sheets together. As described above, the Fe-based electroplated layer serving as the base layer is disposed between the coated layer and the base metal of the high strength coated steel sheet.

For example, two steel sheets are stacked to form a sheet set. Next, the sheet set is held between the pair of welding electrodes disposed on the upper and lower sides of the sheet set, and energization is performed under application of welding force while the energization is controlled such that the prescribed welding conditions are obtained. In this manner, the sheet gap between the steel sheets that forms the faying surface is joined, and the weld described above can thereby be formed (see Fig. 1). When a high strength cold rolled steel sheet and the high strength coated steel sheet are stacked together to form a sheet set, the plurality of steel sheets is stacked such that the surface of the high strength coated steel sheet that has the galvanized layer faces the high strength cold rolled steel sheet.

Next, the energization step in the invention will be described. The invention includes a primary energization step of holding the sheet set using the pair of welding electrodes and performing energization under application of welding force to form a nugget. A holding time Th (s) of the welding force after completion of the primary energization step is controlled such that the relation of formula (1) is satisfied.

$$0 < Th \leq \{F \times (Iw / 1.5)\} / 45 \qquad (1)$$

In formula (1), Th is the holding time (s) of the welding force in the primary energization step; F is the welding force (kN) in the primary energization step; and Iw is the current value (kA) in the primary energization step.

The primary energization step is an energization step of melting an overlapping portion of the lower and upper steel sheets to form the nugget. The primary energization step in the invention may be the step of performing the energization at the current value Iw (kA) while the sheet set is held between the welding electrodes with the welding force F (kN) (i.e., the step of performing the energization at the constant current Iw) or the step of performing the energization using a transition process in which the current is increased continuously to the current value Iw (kA) while the sheet set is held between the welding electrodes with the welding force F (kN).

The holding time Th (s (seconds)) of the welding force after completion of the energization in the primary energization step is set so as to satisfy the condition of formula (1) above. If the holding time Th (s (seconds)) of the welding force after completion of the energization exceeds a value computed from "$\{F \times (Iw / 1.5)\} / 45$" on the right hand side of formula (1), the cooling rate is high, and the above-described average number density of cementite is not obtained. Therefore, the above-described steel sheet microstructure and the above-described surface state (i.e., the amount of solute Si and the amount of solute Mn on the steel sheet surface) are not obtained. The holding time Th of the welding force is preferably 3.0 s or shorter. The holding time Th of the welding force is preferably 0.02 s or longer and more preferably 0.10 s or longer.

In the primary energization step, it is preferable that the welding force F is constant. However, the welding force F during the holding time Th of the welding force may be changed in two or more stages. In this case, the welding force F in formula (1) is the lowest value in the primary energization step.

In the present invention, no particular limitation is imposed on the energization conditions and pressurization conditions for forming the nugget in the primary energization step except for formula (1) above. From the viewpoint of the application to structural components of automobiles etc., it is preferable that the energization conditions and pressurizing conditions other than formula (1) are controlled within the following ranges.

For example, the current value Iw (kA) in the primary energization step is preferably 3.0 to 8.5 kA in order to obtain the nugget diameter stably. The nugget diameter used for spot welds for automotive steel sheets is generally $3.0\sqrt{t}$ to $6.0\sqrt{t}$ (t is the smallest one of the thicknesses of the sheets in the sheet set). If the current value is excessively small, the target nugget diameter cannot be stably obtained. If the current value Iw in the primary energization step is excessively larger than the above range, the nugget diameter may become excessively large, or the degree of melting of the steel sheets may be excessively large. In this case, the molten weld splashes out of the sheet gap, so that the nugget diameter may decrease. However, the current value Iw in the primary energization step may be smaller or larger than the above preferred range so long as the required nugget diameter is obtained.

The energization time tw (s (seconds)) in the primary energization step is preferably 0.12 to 0.50 s. This is the time necessary for obtaining the target nugget diameter, as is the current value Iw in the primary energization step. If the energization time tw in the primary energization step is shorter than 0.12 s, the nugget is not easily formed. If the energization time tw in the primary energization step exceeds 0.50 s, the nugget diameter may become large, and it is feared that the workability may deteriorate. However, the energization time tw in the primary energization step may be shorter or longer than the above preferred range so long as the required nugget diameter is obtained.

As for the pressurizing conditions in the primary energization step, the welding force F (kN) is preferably 2.0 kN to 7.0 kN. If the welding force F in the primary energization step is excessively large, the energizing diameter becomes large, and the required nugget diameter is not easily obtained. If the welding force F in the primary energization step is excessively small, the energizing diameter is small, and splashes are easily generated. It is therefore preferable that the welding force F in the primary energization step falls within the above preferred range. The welding force may be limited by the capacity of the device. However, the welding force F in the primary energization step may be smaller or larger than the above preferred range so long as the required nugget diameter is obtained.

In the present invention, after the primary energization step, secondary energization (a secondary energization step) may be performed. Examples of the secondary energization step include the following two tempering steps.

In one example of the welding conditions in the secondary energization step (a first secondary energization step), the energization may be performed using a higher current for a shorter time than those in the primary energization step, or the energization may be performed in multiple stages. In this case, it is preferable that cooling is first performed for a cooling time of 0.02 to 0.20 s, and then secondary energization is performed. Specifically, the current value It in the secondary energization step is set to be equal to or larger than 1.1 times the current value Iw in the primary energization step, and the energization time (welding time) tt in the secondary energization step is set to 1.0 s or shorter.

The upper limit of the current value It in the secondary energization step is not particularly specified. To prevent re-melting of the nugget, the current value It in the secondary energization step is preferably equal to or less than 2.5 times the current value Iw and more preferably equal to or less than 2.0 times the current value Iw. To reduce segregation of P (phosphorus) at the edge of the nugget, the energization time tt in the secondary energization step is preferably 0.02 s or longer.

Alternatively, in another example of the welding conditions in the secondary energization step (a second secondary energization step), a portion around the nugget is tempered using a current lower than that in the primary energization step. In this case, it is preferable that cooling is first performed for a cooling time of 0.1 to 2.0 s and then secondary energization is performed. Specifically, the current value It in the secondary energization step is set to be equal to or lower than 0.9 times the current value Iw in the primary energization step, and the energization time (welding time) tt in the secondary energization step is set to 2.0 s or shorter.

The upper limit of the current value It in the secondary energization step is not particularly specified. To prevent re-melting of the nugget, the current value It in the secondary energization step is preferably equal to or less than 0.8 times the current value Iw. The current value It in the secondary energization step is preferably equal to or more than 0.3 times the current value Iw.

To facilitate tempering of the edge portion of the nugget, the energization time tt in the secondary energization step is preferably 0.1 s or longer.

Through the above-described secondary energization step (i.e., the first or second secondary energization step), the above-described average number density of cementite can be stably obtained. Even when the secondary energization step is performed, the object of the invention can be achieved, so long as the steel sheet microstructure and the surface state of the resistance spot weld obtained satisfy the ranges of the invention described above.

EXAMPLES

Examples of the invention will next be described. However, the invention is not limited by the following Examples. The invention may be subjected to modifications within a range meeting the gist of the invention, and these modifications are also included in the technical scope of the invention.

Steel having a chemical composition shown in Table 1 was obtained by melting steel and subjected to continuous casting to produce a slab. "-" in Table 1 means that additional elements are not intentionally added and is intended to encompass the case where no additional elements are added (0%) and also the case where additional elements are unavoidably contained.

The slab was heated and then subjected to hot rolling at a finishing delivery temperature of 900°C to obtain a hot-rolled steel sheet, and the hot-rolled steel sheet was cooled to a finish cooling temperature of 500°C and wound into a coil at a coiling temperature of 500°C. The obtained hot rolled steel sheet was pickled and then cold-rolled to obtain a cold rolled steel sheet (thickness: 1.4 mm).

Then a continuous galvanizing line (CGL) was used to subject part of the obtained cold rolled steel sheet to hot-dip galvanizing treatment in a hot-dip galvanizing bath containing Al, Zn, and incidental impurities with an Al concentration in the bath of 0.14% under a condition of a hot-dip galvanizing bath temperature of 460°C to thereby obtain a hot-dip galvanized steel sheet (GI). For part of the GI, both sides of the steel sheet were subjected to Fe-based precoating treatment (Fe-based electroplating treatment) and annealed before the hot-dip galvanizing treatment. The coating weight of the Fe-based precoated layer (Fe-based electroplated layer) is shown in Table 2 or 4.

The rest of the cold rolled steel sheet having passed through the CGL was subjected to the hot-dip galvanizing treatment and further subjected to galvannealing treatment at 550°C to thereby obtain a hot-dip galvannealed steel sheet (GA). Part of the GA had been subjected to the Fe-based precoating treatment (Fe-based electroplating treatment) etc. as described above. The coating weight of the Fe-based precoated layer is shown in Table 2 or 4.

The tensile strength (TS) of the base metal of each of the high strength coated steel sheets (GA and GI) obtained was measured. The tensile strength was measured according to JIS Z 2241. The coating weight of the Fe-based precoated layer was measured by the method for measuring "the thickness of the Fe-based electroplated layer" described above. The measured values are shown in Table 2 or 4.

The retained austenite in the base metal of each steel sheet was measured by the following method.

The volume fraction of the retained austenite was determined by grinding the steel sheet (base metal) to a surface at a position 1/4 of the thickness in the thickness direction and using the X-ray diffraction intensity on the surface at the position 1/4 of the thickness. The K$\alpha$ line of Mo was used as a line source, and the integral intensities of X-ray diffraction lines from the {200}, {211}, and {220} planes of iron ferrite and the {200}, {220}, and {311} planes of austenite were measured by an X-ray diffraction method (apparatus: RINT 2200 manufactured by Rigaku) at an acceleration voltage of 50 keV. These measured values were used to determine the volume fraction of the retained austenite using a computational formula described in "X-ray Diffraction Handbook" (2000), Rigaku Corporation, p. 26, 62-64. The obtained volume fraction (%) is shown in Table 1.

Test specimens of 50 mm × 150 mm were cut from the high strength coated steel sheets (GA, GI) produced as described above, and sheet sets were prepared by combining the test specimens as shown in Tables 2 and 4. Then resistance spot welding was performed under welding conditions shown in Tables 2 and 4 to thereby obtain resistance spot welded members. The welding apparatus used was a servo motor pressing-type single-phase AC (50 Hz) resistance welder attached to a welding gun. The pair of electrode tips used were chromium-copper DR-type electrodes having a tip curvature radius R of 40 mm and a tip diameter of 6 mm.

The symbol "o" in the "Transition process" column in the "Primary energization step" in Tables 2 and 4 represents that the energization was performed using the transition process in which the current was continuously increased to the current value Iw described above, and the symbol "×" represents that the energization was performed at the constant current value Iw described above. Part of the sheet sets were subjected to the secondary energization step under conditions shown in Table 2 or 4 after the primary energization step. "1" in the "Pattern" column in the "Secondary energization step" in Tables 2 and 4 means that the first secondary energization step described above was performed, and "2" means that the second secondary energization step described above was performed.

Each of the resistance spot welded members obtained was used to evaluate the microstructure in the weld and the tensile shear strength and delayed fracture resistance after welding using methods described below. Specifically, the upper steel sheet and the lower steel sheet in the welded member were used for the evaluation. For the sheet sets including three sheets, all the steel sheets were used for the evaluation (see Fig. 2).

<Method for evaluating microstructure of weld>

As shown in Fig. 1, a position on a steel sheet surface that is spaced 100 um from the edge (i.e., point A in Fig. 1) of the corona of the weld in the direction toward the base metal zone 8 of the steel sheets 1 and 2 along the steel sheet faying surface 7 is denoted as a starting point S. The amount of solute Si and the amount of solute Mn in % by mass were measured from the starting point S in the thickness direction using an FE-EPMA. The line analysis of each element was performed from the steel sheet surface to a position 1/4 of the thickness to determine the % by mass of the element. For each of the sheet sets including three steel sheets, the amount of solute Si and the amount of solute Mn were determined using the same method (see Fig. 2) .

The amount of solute Si and the amount of solute Mn in a region within 7 um from the starting point S in the thickness direction (i.e., "Amount of solute Si and amount of solute Mn in steel sheet surface layer" shown in Tables 3 and 5) and the amount of solute Si and the amount of solute Mn at a position 1/4 of the thickness from the starting point S in the thickness direction ("Amount of solute Si and amount of solute Mn at position 1/4 of thickness of steel sheet" shown in Tables 3 and 5) were determined. Then the ratio of the amount of solute Si in the steel sheet surface layer to the amount of solute Si at the position 1/4 of the thickness of the steel sheet was computed, and the value was shown in the "Solute Si ratio" in Table 3 or 5. Similarly, the ratio of the amount of solute Mn in the steel sheet surface layer to the amount of solute Mn at the position 1/4 of the thickness of the steel sheet was computed, and the value was shown in the "Solute Mn ratio" in Table 3 or 5.

As shown in Fig. 1, a position on the steel sheet surface that is spaced 50 um from the edge (i.e., point A in Fig. 1) of the corona in the weld in the direction toward the base metal zone 8 of the steel sheets 1 and 2 along the steel sheet faying surface 7 is denoted as a starting point T. The steel sheet microstructure in a region extending from 50 um to 100 um inclusive from the starting point T in the thickness direction was observed. Specifically, the above region was cut from the obtained resistance spot welded member, and a thicknesswise cross section (a cross section in the thickness direction) was polished, etched with 3% nital, and observed using a TEM (transmission electron microscope) at a magnification of 10000X. Then Image-Pro was used to compute equivalent circle diameters of cementite grains with the lower limit set to 0.005 um to thereby determine the grain diameters of the cementite grains. The average number density (grains/$\mu$m$^2$) of the cementite grains having a diameter of 0.06 um or more was determined as follows. The cross section was observed using the TEM (transmission electron microscope) at a magnification of 10000X. The number density was determined at 10 points, and the average value was used. For the sheet sets including three sheets, the average number density of cementite grains having a grain diameter of 0.06 um or more was determined using the same method (see Fig. 2). The value determined is shown in Table 3 or 5.

<Evaluation of tensile shear strength after welding>

The tensile shear strength (TSS) was evaluated based on a tensile shear test.
The tensile shear strength after resistance spot welding was evaluated based on a tensile shear test method (JIS Z 3136). In the shear tensile test, shear tensile test pieces (lateral length: 50 mm, longitudinal length: 150 mm) were cut from the obtained high strength coated steel sheets (GA and GI). Test specimens were prepared using sheet sets shown in Tables 2 and 4 and resistance-spot-welded under welding conditions shown in Tables 2 and 4. In Tables 3 and 5, when the tensile shear strength was 12.0 kN or more, the tensile shear strength after resistance spot welding was rated good (represented by the symbol "o" in Tables 3 and 5). When the tensile shear strength was less than 12.0 kN, the tensile shear strength after resistance spot welding was rated poor (represented by the symbol "×" in Tables 3 and 5). Specifically, when the tensile shear strength was good, the weld was rated as having "good tensile shear strength."

<Evaluation of delayed fracture resistance after welding>

The delayed fracture resistance was evaluated using the following method. First, for a sheet set including two stacked steel sheets, square spacers with a side length of 50 mm and a thickness of 1.4 mm were disposed at opposite end portions of the sheet set so as to be sandwiched between the two steel sheets (longitudinal length: 150 mm, lateral length: 50 mm), and tack welding was performed. Then the sheet set including the two stacked steel sheets was welded at its center under welding conditions shown in Table 2 to produce a welded joint.
For a sheet set including three stacked steel sheets, the spacers were disposed at opposite end portions of the sheet set so as to be sandwiched between adjacent stacked steel sheets, and tack welding was performed. Then the sheet set including the three stacked steel sheets was welded at its center under welding conditions shown in Table 4 to produce a welded joint.
Each of the obtained welded joints was left to stand in air at room temperature (20°C) for 24 hours, then immersed in an aqueous solution of 3% NaCl + 1.0% NH$_4$SCN, and subjected to cathodic electrolytic charging at a current density of 0.07 mA/cm$^2$ for 96 hours, and the presence or absence of delayed fracture was checked. In Tables 3 and 5, when no delayed fracture occurred in the welded joint after immersion, the symbol "o" was assigned. When delayed fracture occurred, the symbol "×" was assigned. Specifically, when the symbol "o" was assigned, the weld joint was rated as having "good delayed fracture resistance."
The results of the measurement of the tensile shear strength and delayed fracture resistance are shown in Tables 3 and 5.

[Table 1]

| Steel type | Chemical composition (% by mass)* | | | | | | | | Microstructure of base metal of steel sheet (Volume fraction of retained austenite) | Remarks |
|---|---|---|---|---|---|---|---|---|---|---|
| | C | Si | Mn | P | S | Al | N | Other components | | |
| A | 0.18 | 1.56 | 2.84 | 0.01 | 0.001 | 0.03 | 0.002 | - | 13 | Suitable steel |
| B | 0.22 | 1.11 | 3.12 | 0.01 | 0.001 | 0.02 | 0.003 | Sb: 0.008, Ti: 0.02, B: 0.0022 | 0 | Suitable steel |
| C | 0.15 | 2.35 | 2.09 | 0.01 | 0.002 | 0.03 | 0.002 | V:0.02, Cu: 0.11, Ni: 0.18 | 15 | Suitable steel |
| D | 0.13 | 1.45 | 3.95 | 0.01 | 0.001 | 0.03 | 0.003 | Cr: 0.22, Ca: 0.002, REMs: 0.002 | 11 | Suitable steel |
| E | 0.33 | 1.05 | 2.21 | 0.01 | 0.002 | 0.86 | 0.005 | Mo: 0.15, Nb: 0.02 | 7 | Suitable steel |
| F | 0.30 | 2.81 | 2.55 | 0.01 | 0.003 | 0.03 | 0.003 | - | 16 | Comparative steel |
| G | 0.15 | 1.56 | 4.95 | 0.01 | 0.001 | 0.03 | 0.003 | - | 12 | Comparative steel |
| H | 0.14 | 1.22 | 2.38 | 0.04 | 0.004 | 0.18 | 0.004 | - | 8 | Suitable steel |
| I | 0.31 | 0.85 | 2.45 | 0.01 | 0.003 | 0.44 | 0.0075 | - | 13 | Suitable steel |

* The balance is Fe and incidental impurities.

[Table 2]

| No. | Sheet set | | | | | | | | | | | | Welding conditions | | | | | | | | | | Remarks |
|---|---|---|---|---|---|---|---|---|---|---|---|---|---|---|---|---|---|---|---|---|---|---|---|
| | Upper steel sheet | | | | | | Lower steel sheet | | | | | | Primary energization step | | | | | | Secondary energization step | | | | |
| | | | | Steel sheet surface | | | | | | | Steel sheet surface | | | | | | | | | | | | |
| | Steel type | Tensile strength TS (MPa) | Type of coating *2 | Coating weight per side (g/m²) | Precoated layer *1 | Coating weight of precoated layer (g/m²) | Steel type | Tensile strength TS (MPa) | Type of coating *2 | Coating weight per side (g/m²) | Precoated layer *1 | Coating weight of precoated layer (g/m²) | Current value Iw (kA) | Energization time tw (s) | Welding force F (kN) | Welding force holding time Th (s) | Transition process | Formula (1)*3 | Cooling time (s) | Current value It (kA) | Energization time tt (s) | Pattern | |
| 1 | A | 1211 | GA | 45 | Fe | 10 | A | 1211 | GA | 45 | Fe | 10 | 6.5 | 0.30 | 3.5 | 0.10 | × | ○ | - | - | - | - | Inventive Example |
| 2 | B | 1311 | GA | 50 | Fe | 2 | B | 1311 | GA | 50 | Fe | 2 | 6.8 | 0.26 | 2.5 | 0.14 | × | ○ | - | - | - | - | Inventive Example |
| 3 | C | 1088 | GA | 40 | Fe | 20 | C | 1088 | GA | 40 | Fe | 20 | 7.0 | 0.24 | 4.5 | 0.06 | × | ○ | 0.20 | 9.8 | 0.06 | 1 | Inventive Example |
| 4 | A | 1211 | GA | 45 | Fe | 10 | D | 1055 | GA | 35 | Fe | 10 | 6.8 | 0.40 | 3.0 | 0.22 | ○ | ○ | - | - | - | - | Inventive Example |
| 5 | B | 1311 | GA | 50 | Fe | 2 | E | 1488 | GA | 55 | Fe | 5 | 6.8 | 0.34 | 3.5 | 0.12 | × | ○ | - | - | - | - | Inventive Example |
| 6 | A | 1211 | GI | 40 | Fe | 10 | C | 1088 | GA | 40 | Fe | 20 | 6.5 | 0.35 | 4.0 | 0.22 | × | ○ | 0.34 | 3.0 | 0.30 | 2 | Comparative Example |
| 7 | B | 1308 | GA | 50 | - | - | B | 1308 | GA | 50 | - | - | 6.4 | 0.30 | 3.0 | 0.10 | × | ○ | - | - | - | - | Comparative Example |
| 8 | A | 1211 | GA | 45 | Fe | 10 | D | 1055 | GA | 35 | Fe | 10 | 6.5 | 0.34 | 2.5 | 0.50 | × | × | - | - | - | - | Comparative Example |
| 9 | F | 1308 | GA | 40 | Fe | 5 | F | 1308 | GA | 40 | Fe | 5 | 6.5 | 0.30 | 3.0 | 0.24 | × | ○ | - | - | - | - | Comparative Example |
| 10 | G | 1305 | GA | 50 | Fe | 5 | G | 1305 | GA | 50 | Fe | 5 | 6.5 | 0.30 | 3.0 | 0.24 | × | ○ | - | - | - | - | Inventive Example |
| 11 | H | 1002 | GA | 45 | Fe | 35 | — | 1562 | GA | 45 | Fe | 1 | 10.0 | 0.40 | 4.0 | 0.36 | × | ○ | - | - | - | - | Inventive Example |
| 12 | — | 1562 | GA | 45 | Fe | 1 | — | 1562 | GA | 45 | Fe | 1 | 8.3 | 0.52 | 5.0 | 0.32 | × | ○ | 0.10 | 13.2 | 0.04 | 1 | Comparative Example |
| 13 | A | 1211 | GA | 45 | Fe | 2 | B | 1311 | GA | 50 | Fe | 3 | 5.8 | 0.40 | 4.0 | 0.22 | × | ○ | 0.22 | 2.5 | 0.60 | 2 | Inventive Example |
| 14 | — | 1562 | GA | 45 | - | - | — | 1562 | GA | 45 | Fe | 0.02 | 7.0 | 0.28 | 4.5 | 0.40 | × | ○ | - | - | - | - | Comparative Example |
| 15 | G | 1305 | GA | 45 | Fe | 10 | A | 1211 | GA | 45 | Fe | 15 | 6.8 | 0.30 | 3.5 | 0.10 | × | ○ | - | - | - | - | Inventive Example |
| 16 | B | 1356 | GA | 40 | Fe | 20 | B | 1344 | GA | 45 | Fe | 40 | 7.2 | 0.22 | 4.0 | 0.14 | × | ○ | - | - | - | - | Inventive Example |

*1. Precoated layer;    Fe: Fe-based electroplated layer;    -: No precoated layer

*2. Type of coating;    GI: Hot-dip galvanized coating, GA: Hot-dip galvannealed coating

*3. $3.0 < Th \le \{F \times (Iw / 1.5)\} / 45$    (1)

[Table 3]

| No. | Microstructure of resistance spot weld (upper steel sheet) | | | | | | | Microstructure of resistance spot weld (lower steel sheet) | | | | | | | Evaluation results | | Remarks |
| | Amount of solute Si in steel sheet surface layer (% by mass) | Amount of solute Si at position 1/4 of thickness of steel sheet (% by mass) | Solute Si ratio (%) | Amount of solute Mn in steel sheet surface layer (% by mass) | Amount of solute Mn at position 1/4 of thickness of steel sheet (% by mass) | Solute Mn ratio (%) | Average number density of cementite grains having grain diameter of 0.06 µm or more (grains/µm²) | Amount of solute Si in steel sheet surface layer (% by mass) | Amount of solute Si at position 1/4 of thickness of steel sheet (% by mass) | Solute Si ratio (%) | Amount of solute Mn in steel sheet surface layer (% by mass) | Amount of solute Mn at position 1/4 of thickness of steel sheet (% by mass) | Solute Mn ratio(%) | Average number density of cementite grains having grain diameter of 0.06 µm or more (grains/µm²) | TSS | Delayed fracture characteristics | |
|---|---|---|---|---|---|---|---|---|---|---|---|---|---|---|---|---|---|
| 1 | 0.08 | 1.6 | 5 | 0.20 | 2.8 | 7 | 0.16 | 0.08 | 1.6 | 5 | 0.20 | 2.8 | 7 | 0.15 | ○ | ○ | Inventive Example |
| 2 | 0.12 | 1.1 | 11 | 0.27 | 3.1 | 9 | 0.11 | 0.12 | 1.1 | 11 | 0.28 | 3.1 | 9 | 0.12 | ○ | ○ | Inventive Example |
| 3 | 0.11 | 2.4 | 5 | 0.17 | 2.1 | 8 | 0.11 | 0.12 | 2.4 | 5 | 0.17 | 2.1 | 8 | 0.11 | ○ | ○ | Inventive Example |
| 4 | 0.07 | 1.6 | 4 | 0.22 | 2.8 | 8 | 0.19 | 0.09 | 1.5 | 6 | 0.40 | 4.0 | 10 | 0.12 | ○ | ○ | Inventive Example |
| 5 | 0.18 | 1.1 | 16 | 0.27 | 3.1 | 9 | 0.18 | 0.12 | 1.1 | 11 | 0.11 | 2.2 | 5 | 0.25 | ○ | ○ | Inventive Example |
| 6 | 0.21 | 1.6 | 13 | 0.13 | 2.8 | 5 | 0.10 | 0.16 | 2.4 | 7 | 0.19 | 2.1 | 9 | 0.15 | ○ | ○ | Inventive Example |
| 7 | 1.00 | 1.1 | 91 | 2.98 | 3.1 | 96 | 0.15 | 1.09 | 1.1 | 98 | 3.03 | 3.1 | 97 | 0.18 | × | × | Comparative Example |
| 8 | 0.22 | 1.6 | 14 | 0.51 | 2.8 | 18 | 0.04 | 0.20 | 1.5 | 14 | 0.47 | 4.0 | 12 | 0.05 | × | × | Comparative Example |
| 9 | 0.52 | 2.8 | 19 | 0.29 | 2.6 | 11 | 0.05 | 0.62 | 2.8 | 22 | 0.23 | 2.6 | 9 | 0.06 | × | × | Comparative Example |
| 10 | 0.31 | 1.6 | 19 | 1.35 | 5.0 | 27 | 0.05 | 0.20 | 1.6 | 13 | 1.09 | 5.0 | 22 | 0.07 | × | × | Comparative Example |
| 11 | 0.19 | 1.2 | 16 | 0.43 | 2.4 | 18 | 0.14 | 0.02 | 0.9 | 2 | 0.05 | 2.5 | 2 | 0.11 | ○ | ○ | Inventive Example |
| 12 | 0.19 | 0.9 | 21 | 0.48 | 2.5 | 19 | 0.15 | 0.20 | 0.9 | 22 | 0.45 | 2.5 | 18 | 0.16 | ○ | ○ | Inventive Example |
| 13 | 0.35 | 1.6 | 22 | 0.50 | 2.8 | 18 | 0.11 | 0.18 | 1.1 | 16 | 0.74 | 3.1 | 24 | 0.13 | ○ | ○ | Inventive Example |
| 14 | 0.43 | 0.9 | 48 | 1.10 | 2.5 | 44 | 0.11 | 0.68 | 0.9 | 76 | 2.05 | 2.5 | 82 | 0.11 | × | × | Comparative Example |
| 15 | 0.53 | 1.6 | 33 | 1.60 | 5.0 | 32 | 0.09 | 0.08 | 1.6 | 5 | 0.22 | 2.8 | 8 | 0.16 | ○ | ○ | Inventive Example |
| 16 | 0.02 | 1.1 | 2 | 0.12 | 3.1 | 4 | 0.12 | 0.00 | 1.1 | 0 | 0.00 | 3.1 | 0 | 0.11 | ○ | ○ | Inventive Example |

[Table 4]

| No. | Sheet set | | | | | | | | | | | | | | | | | | | Welding conditions | | | | | | | | | | Remarks |
|---|---|---|---|---|---|---|---|---|---|---|---|---|---|---|---|---|---|---|---|---|---|---|---|---|---|---|---|---|---|---|
| | Upper steel sheet | | | | | | Intermediate steel sheet | | | | | | Lower steel sheet | | | | | | Primary energization step | | | | | | Secondary energization step | | | | |
| | Steel type | Tensile strength TS (MPa) | Steel sheet surface | | | | Steel type | Tensile strength TS (MPa) | Steel sheet surface | | | | Steel type | Tensile strength TS (MPa) | Steel sheet surface | | | | Current value Iw (kA) | Energization time tw (s) | Welding force F (kN) | Welding force holding time Th (s) | Transition process | Formula (1)*3 | Cooling time (s) | Current value It (kA) | Energization time tt (s) | Pattern | |
| | | | Type of coating *2 | Coating weight per side (g/m²) | Precoated layer*1 | Coating weight of precoated layer (g/m²) | | | Type of coating *2 | Coating weight per side (g/m²) | Precoated layer*1 | Coating weight of precoated layer (g/m²) | | | Type of coating *2 | Coating weight per side (g/m²) | Precoated layer*1 | Coating weight of precoated layer (g/m²) | | | | | | | | | | | |
| 1 | A | 1211 | GA | 45 | Fe | 10 | A | 1211 | GA | 45 | Fe | 10 | A | 1211 | GA | 45 | Fe | 10 | 8.5 | 0.60 | 5.0 | 0.20 | ✕ | ○ | - | - | - | - | Inventive Example |
| 2 | B | 1311 | GA | 50 | Fe | 2 | C | 1088 | GA | 40 | Fe | 20 | D | 1055 | GA | 35 | Fe | 10 | 9.0 | 0.54 | 5.5 | 0.36 | ✕ | ○ | - | - | - | - | Inventive Example |

*1. Precoated layer;   Fe: Fe-based electroplated layer,   -: No precoated layer

*2. Type of coating;   GI: Hot-dip galvanized coating, GA: Hot-dip galvannealed coating

*3. $0 < Th \leq \{F \times (Iw / 1.5)\} / 45$      (1)

19

[Table 5]

| No. | Microstructure of resistance spot weld | | | | | | | | | | | | | | | | | | | | | | | | | | | | Evaluation results | | Remarks |
|---|---|---|---|---|---|---|---|---|---|---|---|---|---|---|---|---|---|---|---|---|---|---|---|---|---|---|---|---|---|---|---|
| | Upper steel sheet | | | | | | | Intermediate steel sheet (faying surface on upper steel sheet side) | | | | | | | Intermediate steel sheet (faying surface on lower steel sheet side) | | | | | | | Lower steel sheet | | | | | | | | | |
| | Amount of solute Si | | | Amount of solute Mn | | | Average number density (grains / μm²) | Amount of solute Si | | | Amount of solute Mn | | | Average number density (grains / μm²) | Amount of solute Si | | | Amount of solute Mn | | | Average number density (grains / μm²) | Amount of solute Si | | | Amount of solute Mn | | | Average number density (grains / μm²) | | | |
| | Steel sheet surface layer (% by mass) | Position 1/4 of thickness of steel sheet (% by mass) | Solute Si ratio (%) | Steel sheet surface layer (% by mass) | Position 1/4 of thickness of steel sheet (% by mass) | Solute Mn ratio (%) | | Steel sheet surface layer (% by mass) | Position 1/4 of thickness of steel sheet (% by mass) | Solute Si ratio (%) | Steel sheet surface layer (% by mass) | Position 1/4 of thickness of steel sheet (% by mass) | Solute Mn ratio (%) | | Steel sheet surface layer (% by mass) | Position 1/4 of thickness of steel sheet (% by mass) | Solute Si ratio (%) | Steel sheet surface layer (% by mass) | Position 1/4 of thickness of steel sheet (% by mass) | Solute Mn ratio (%) | | Steel sheet surface layer (% by mass) | Position 1/4 of thickness of steel sheet (% by mass) | Solute Si ratio (%) | Steel sheet surface layer (% by mass) | Position 1/4 of thickness of steel sheet (% by mass) | Solute Mn ratio (%) | | TSS | Delayed fracture characteristics | |
| 1 | 0.10 | 1.6 | 6 | 0.22 | 2.8 | 8 | 0.16 | 0.14 | 1.6 | 9 | 0.45 | 2.8 | 16 | 0.12 | 0.13 | 1.6 | 8 | 0.42 | 2.8 | 15 | 0.16 | 0.11 | 1.6 | 7 | 0.25 | 2.8 | 9 | 0.15 | ○ | ○ | Inventive Example |
| 2 | 0.11 | 1.1 | 10 | 0.45 | 3.1 | 15 | 0.16 | 0.29 | 2.4 | 12 | 0.11 | 2.1 | 5 | 0.13 | 0.26 | 2.4 | 11 | 0.13 | 2.1 | 6 | 0.14 | 0.12 | 1.5 | 8 | 0.27 | 4.0 | 7 | 0.12 | ○ | ○ | Inventive Example |

EP 4 316 719 A1

As can be seen from Tables 2 to 5, in each of the Inventive Examples, the resistance spot welded member including a plurality of resistance spot welded steel sheets including at least one high strength coated steel sheet was a good welded member having excellent tensile shear strength and excellent delayed fracture resistance. However, in the Comparative Examples, a good welded member could not be obtained.

Reference Signs List

1, 2, 9 steel sheet
3 nugget
4 heat-affected zone
5 corona
6 resistance spot weld
7 steel sheet faying surface
8 base metal zone
10 resistance spot welded member

**Claims**

1.  A resistance spot welded member comprising a resistance spot weld formed by resistance-spot-welding a plurality of steel sheets including at least one high strength coated steel sheet,

    wherein the high strength coated steel sheet has a chemical composition containing, in mass %,
    C: 0.10 to 0.40%,
    Si: 0.7 to 2.5%,
    Mn: 2.0 to 4.0%,
    P: 0.05% or less,
    S: 0.004% or less,
    Al: 0.01 to 1.00%, and
    N: less than 0.010%,
    with the balance being Fe and incidental impurities,
    wherein the high strength coated steel sheet includes a coated layer, a base metal, and an Fe-based electroplated layer serving as a base layer and interposed between the coated layer and the base metal,
    wherein, when a position on a steel sheet surface that is spaced 100 um from an edge of a corona of the resistance spot weld in a direction toward a base metal zone along a steel sheet faying surface is denoted as a starting point S,
    the amount of solute Si and the amount of solute Mn in a region within 7 $\mu$m from the starting point S in a thickness direction are 35% or less of the amount of solute Si and 35% or less of the amount of solute Mn, respectively, at a position 1/4 of a sheet thickness from the starting point S in the thickness direction, and
    wherein, when a position on the steel sheet surface that is spaced 50 um from the edge of the corona in the direction toward the base metal zone along the steel sheet faying surface is denoted as a starting point T,
    the average number density of cementite grains having a grain diameter of 0.06 um or more in a steel sheet microstructure in a region extending from 50 um to 100 um inclusive from the starting point T in the thickness direction is 0.08 grains/$\mu$m$^2$ or more.

2.  The resistance spot welded member according to claim 1, wherein the chemical composition further contains, in mass %, one or two or more selected from

    Nb: 0.05% or less,
    Ti: 0.05% or less,
    V: 0.05% or less,
    Cr: 1.0% or less,
    Mo: 0.50% or less,
    Cu: 0.50% or less,
    Ni: 0.50% or less,
    Sb: 0.020% or less,

B: 0.010% or less,
Ca: 0.0050% or less, and
REMs: 0.0050% or less.

3. The resistance spot welded member according to claim 1 or 2, wherein the coated layer of the high strength coated steel sheet is a galvanized layer or a hot-dip galvannealed layer.

4. The resistance spot welded member according to any one of claims 1 to 3, wherein the coating weight of the Fe-based electroplated layer is 0.5 g/m$^2$ or more per side.

5. The resistance spot welded member according to any one of claims 1 to 4, wherein the high strength coated steel sheet has a tensile strength of 980 MPa or more.

6. The resistance spot welded member according to any one of claims 1 to 5, wherein the high strength coated steel sheet has a microstructure including retained austenite at a volume fraction of 30% or less.

7. A resistance spot welding method for the resistance spot welded member according to any one of claims 1 to 6, the Fe-based electroplated layer that serves as the base layer being interposed between the coated layer and the base metal of the at least one high strength coated steel sheet,
the method comprising:

a primary energization step of holding, between a pair of welding electrodes, a sheet set including the plurality of steel sheets including the at least one high strength coated steel sheet and performing energization under application of welding force to thereby form a nugget,
wherein a holding time Th (s) of the welding force after completion of the energization in the primary energization step satisfies a relation of formula (1):

$$0 < Th \le \{F \times (Iw / 1.5)\} / 45 \qquad (1)$$

where, in formula (1), Th is the holding time (s) of the welding force in the primary energization step; F is the welding force (kN) in the primary energization step; and Iw is a value of a current (kA) in the primary energization step.

8. The resistance spot welding method for the resistance spot welded member according to claim 7, wherein the primary energization step is

the step of performing the energization at the current value Iw (kA) while the sheet set is held between the welding electrodes with the welding force F (kN) or
the step of performing the energization using a transition process in which the current is increased continuously to the current value Iw (kA) while the sheet set is held between the welding electrodes with the welding force F (kN).

9. The resistance spot welding method for the resistance spot welded member according to claim 7 or 8, the method further comprising, after the primary energization step, a secondary energization step,

wherein the secondary energization step is
the step of performing energization at a current value equal to or higher than 1.1 times the current value Iw in the primary energization step for an energization time of 1.0 s or shorter or the step of performing energization at a current value equal to or lower than 0.9 times the current value Iw in the primary energization step for an energization time of 2.0 s or shorter.

EP 4 316 719 A1

# FIG. 1

# FIG. 2

23

## INTERNATIONAL SEARCH REPORT

| International application No. |
|---|
| **PCT/JP2022/011158** |

**A.    CLASSIFICATION OF SUBJECT MATTER**

*B23K 11/16*(2006.01)i; *B23K 11/11*(2006.01)i; *C21D 9/46*(2006.01)i; *C22C 38/00*(2006.01)i; *C22C 38/06*(2006.01)i;
*C22C 38/60*(2006.01)i; *C23C 2/02*(2006.01)i; *C23C 2/06*(2006.01)i; *C23C 28/02*(2006.01)i
FI:    B23K11/16 311; B23K11/11 540; C22C38/00 301T; C22C38/00 301Z; C22C38/00 302X; C22C38/60; C22C38/06;
C23C2/06; C23C2/02; C23C28/02; C21D9/46 J

According to International Patent Classification (IPC) or to both national classification and IPC

**B.    FIELDS SEARCHED**

Minimum documentation searched (classification system followed by classification symbols)

B23K11/16; B23K11/11; C21D9/46; C22C38/00; C22C38/06; C22C38/60; C23C2/02; C23C2/06; C23C28/02

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | JP 2021-500474 A (ARCELORMITTAL) 07 January 2021 (2021-01-07) paragraphs [0014]-[0046] | 1-8 |
| A | | 9 |
| A | JP 2021-500473 A (ARCELORMITTAL) 07 January 2021 (2021-01-07) entire text, all drawings | 1-9 |
| A | JP 2008-254053 A (NIPPON STEEL CORP.) 23 October 2008 (2008-10-23) entire text, all drawings | 1-9 |

☐ Further documents are listed in the continuation of Box C.        ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **23 May 2022** | **31 May 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
**Information on patent family members**

International application No.

**PCT/JP2022/011158**

| Patent document cited in search report | | | Publication date (day/month/year) | Patent family member(s) | | | Publication date (day/month/year) |
|---|---|---|---|---|---|---|---|
| JP | 2021-500474 | A | 07 January 2021 | US paragraphs [0019]-[0064] CN | 2020/0277693 111263829 | A1 A | |
| JP | 2021-500473 | A | 07 January 2021 | US entire text, all drawings CN | 2020/0283868 111279007 | A1 A | |
| JP | 2008-254053 | A | 23 October 2008 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6194765 B

- JP 6558443 B

**Non-patent literature cited in the description**

- X-ray Diffraction Handbook. Rigaku Corporation, 2000, 26, , 62-64